# EUROPEAN PATENT APPLICATION

(11) **EP 2 608 216 A1**
(43) Date of publication of application: **26.06.2013**
(21) Application number: 11818104.9
(22) Date of filing: 09.08.2011
(51) Int. Cl.: G21D 3/00, G21D 1/00

(54) **MIXING SYSTEM**

(30) Priority: 20.08.2010 JP 2010185588
(71) Applicant: Mitsubishi Heavy Industries, Ltd., Tokyo 108-8215 (JP)
(72) Inventor: SAGUCHI, Tetsuo, Tokyo 108-8215 (JP); MIYAKE,Shuhei, Tokyo 108-8215 (JP); TANI, Akihiro, Tokyo 108-8215 (JP)
(74) Representative: Intès, Didier Gérard André
(86) International application number: PCT/JP2011/068183
(87) International publication number: WO 2012/023462

(57) **Abstract**

Provided is a mixing system including: a backup heater 41 which increases an internal pressure of a pressurizer; a spray valve which decreases the internal pressure of the pressurizer; a pressure sensor which detects the pressure inside the pressurizer; and a pressure control unit 44 which performs a feedback control on a spray valve so that the pressure becomes a target pressure based on a detection pressure value detected by the pressure sensor, wherein the pressure control unit 44 includes a PID control unit 51 which performs a feedback control when heating the coolant by the backup heater 41 and outputs a pressure controller signal and a bias setting unit 53 which sets a bias toward the operation side of the spray valve with respect to the pressure controller signal, and wherein the spray valve is operated based on the pressure controller signal subjected to the setting of the bias.

## Description

### Field

The present invention relates to a mixing system which circulates a coolant inside a pressurizer while maintaining the internal pressure of the pressurizer installed in a nuclear facility at a predetermined target pressure.

### Background

Hitherto, as a device which controls such a mixing system, there is known an automatic nuclear reactor makeup water mixing control device which includes an automatic mixing control monitoring device, a boron concentration measuring unit, and a pressurizer heater (for example, see Patent Literature 1). The automatic nuclear reactor makeup water mixing control device automatically operates the pressurizer heater when the supply of the makeup water to the nuclear reactor is completed. Then, when the automatic nuclear reactor makeup water mixing control device determines that the boron concentration is uniform by the boron concentration measuring unit after operating the pressurizer heater, the automatic mixing control monitoring device ends the mixing by stopping the operation of the pressurizer heater.

### Citation List

### Patent Literature

Patent Literature 1: Japanese Patent Application Laid-open No. 60-078395

### Summary

### Technical Problem

Incidentally, when the pressurizer heater is operated, the coolant inside the pressurizer is heated, so that the internal pressure of the pressurizer increases. For this reason, in the mixing system, the coolant is cooled by spraying the spray water from the spray valve installed inside the pressurizer so that the internal pressure of the pressurizer decreases to the target pressure. Accordingly, it is possible to maintain the internal pressure of the pressurizer at the target pressure by adjusting the spray amount of the spray water. That is, in the mixing system, the spray valve is opened when the internal pressure of the pressurizer increases to the operation pressure at which the spray valve is operated after operating the pressurizer heater. However, in such an existing mixing system, the spray valve is opened after operating the pressurizer heater. For this reason, the internal pressure of the pressurizer transiently increases due to an increase in temperature of the coolant by the heating of the pressurizer heater until the spray valve is opened after operating the pressurizer heater. Thus, in the conventional mixing system, it is difficult to appropriately maintain the internal pressure of the pressurizer at the target pressure immediately after operating the pressurizer heater.

Therefore, it is an object of the invention to provide a mixing system capable of stably maintaining the internal pressure of the pressurizer at the target pressure when heating the coolant inside the pressurizer.

### Solution to Problem

According to an aspect of the present invention, a mixing system which circulates a coolant inside a pressurizer while maintaining an internal pressure of the pressurizer installed in a nuclear facility at a predetermined target pressure, includes: a heater which is installed inside the pressurizer and heats the coolant so as to increase the internal pressure of the pressurizer; a cooler which is installed inside the pressurizer and cools the coolant so as to decrease the internal pressure of the pressurizer; a pressure detector which detects the pressure inside the pressurizer; and a pressure controller which performs a feedback control on the cooler so that the pressure becomes the target pressure based on a detection input value detected by the pressure detector. The pressure controller includes a feedback controller which performs a feedback control on the detection input value detected when heating the coolant by the heater and outputs the result as a control output value to the cooler; and a bias setting unit which sets a bias toward the operation side of the cooler with respect to the control output value. The cooler is operated based on the control output value subjected to the setting of the bias.

According to this configuration, it is possible to set the bias toward the operation side of the cooler with respect to the control output value input to the cooler when heating the coolant by the heater. For this reason, when the coolant is heated by the heater, the cooler may be promptly operated compared to the related art. Accordingly, since the coolant may be promptly cooled compared to the related art, a transient increase in the internal pressure of the pressurizer after heating by the heater decreases compared to the related art. Thus, the pressure controller may stably control the internal pressure of the pressurizer when heating the coolant inside the pressurizer, and hence appropriately maintain the internal pressure of the pressurizer at the target pressure.

Advantageously, in the mixing system, the cooler is operated when the input control output value becomes a predetermined operation setting value or more, and the bias setting unit sets the bias by adding a predetermined bias setting value to the control output value, and sets the bias setting value so that the control output value subjected to the setting of the bias becomes the operation setting value or more.

According to this configuration, the cooler may be promptly operated when heating the coolant by the heater. Accordingly, since the coolant may be promptly cooled, an increase in the internal pressure of the pressurizer may be suppressed. Thus, the pressure controller may stably control the internal pressure of the pressurizer when heating the coolant inside the pressurizer, and hence appropriately maintain the internal pressure of the pressurizer at the target pressure.

Advantageously, in the mixing system, the bias setting value is changeable.

According to this configuration, even when the operation setting value set in the cooler changes, the bias setting value may be appropriately changed in accordance with the change, and hence the cooler may be promptly operated.

Advantageously, in the mixing system, the heater automatically heats the coolant simultaneously when the bias is set by the bias setting unit.

According to this configuration, since the heater may be automatically operated simultaneously when setting the bias, the operator's manual operation may not be provided.

Advantageously, in the mixing system, the feedback controller performs a PID control, and the pressure controller further includes a derivative control blocking unit which blocks a derivative control inside the PID control when heating the coolant by the heater.

According to this configuration, it is possible to eliminate the derivative effect with respect to an increase in the internal pressure of the pressurizer when heating the coolant. Accordingly, it is possible to suppress a change in the pressure inside the pressurizer when heating the coolant, and hence to perform a stable control.

### Brief Description of Drawings

FIG. 1 is a schematic configuration diagram schematically illustrating a nuclear facility which includes a mixing system according to the invention.
FIG. 2 is an explanatory diagram illustrating a circuit of a pressure control unit.

### Description of Embodiments

Hereinafter, a mixing system according to the invention will be described with reference to the accompanying drawings. Note that, the invention is not limited to the embodiment below. Further, the constituents in the embodiment below include constituents which may be replaced or easily implemented by the person skilled in the art or constituents which have substantially the same configuration.

### Embodiment

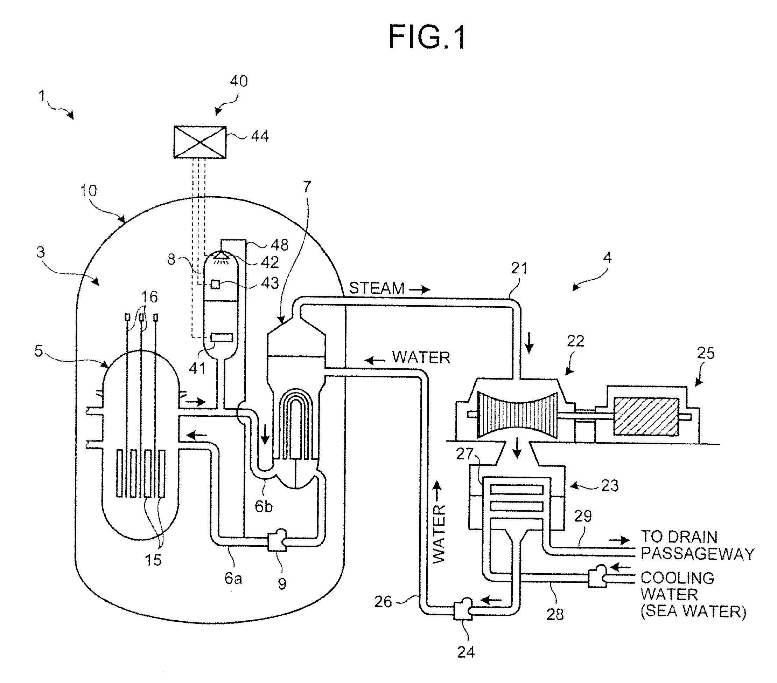

FIG. 1 is a schematic configuration diagram schematically illustrating a nuclear facility which includes a mixing system according to the invention. A mixing system 40 according to the invention is installed in a pressurizer 8 of a nuclear facility 1 having a nuclear reactor 5, and as the nuclear reactor 5, for example, a pressurized water reactor (PMR) is used. The nuclear facility 1 which uses the nuclear reactor 5 as the pressurized water reactor includes a nuclear reactor cooling 3 which includes the nuclear reactor 5 and a turbine system 4 which exchanges heat with the nuclear reactor cooling system 3, where a nuclear reactor coolant circulates in the nuclear reactor cooling system 3 and a secondary coolant circulates in the turbine system 4.

The nuclear reactor cooling system 3 includes the nuclear reactor 5 and a steam generator 7 which is connected to the nuclear reactor 5 through a cold leg 6a and a hot leg 6b. Further, the hot leg 6b is provided with the pressurizer 8 and the cold leg 6a is provided with a nuclear reactor coolant pump 9. Then, the nuclear reactor 5, the cold leg 6a, the hot leg 6b, the steam generator 7, the pressurizer 8, and the nuclear reactor coolant pump 9 are stored in a containment vessel 10.

The nuclear reactor 5 is a pressurized water reactor as described above, and is filled with the nuclear reactor coolant. Then, a plurality of fuel assemblies 15 are stored inside the nuclear reactor 5, and a plurality of control rods 16 which control the nuclear fission of the fuel assembly 15 are installed in the respective fuel assemblies 15 in a drawable manner.

When the nuclear fission of the fuel assemblies 15 is caused while controlling the nuclear fission reaction by the control rods 16, thermal energy is generated by the nuclear fission. The generated thermal energy heats the nuclear reactor coolant, and the heated nuclear reactor coolant is sent to the steam generator 7 through the hot leg 6b. On the other hand, the nuclear reactor coolant which is sent from each steam generator 7 through the cold leg 6a flows into the nuclear reactor 5 and cools the inside of the nuclear reactor 5.

The pressurizer 8 which is provided in the hot leg 6b pressurizes the nuclear reactor coolant heated to a high temperature so as to suppress the boiling of the nuclear reactor coolant. Further, the steam generator 7 exchanges the heat of the nuclear reactor coolant which has a high temperature and a high pressure with the secondary coolant. Accordingly, the secondary coolant is evaporated, so that steam is generated and the nuclear reactor coolant which has a high temperature and a high pressure is cooled. Each nuclear reactor coolant pump 9 circulates the nuclear reactor coolant in the nuclear reactor cooling system 3 so that the nuclear reactor coolant is sent from each steam generator 7 to the nuclear reactor 5 through the cold leg 6a and the nuclear reactor coolant is sent from the nuclear reactor 5 to each steam generator 7 through the hot leg 6b.

Here, a series of operations in the nuclear reactor cooling system 3 of the nuclear facility 1 will be described. When the nuclear reactor coolant is heated by the thermal energy generated by the nuclear fission reaction inside the nuclear reactor 5, the heated nuclear reactor coolant is sent to each steam generator 7 by each nuclear reactor coolant pump 9 through the hot leg 6b. The high-temperature nuclear reactor coolant which passes through the hot leg 6b is pressurized by the pressurizer 8 so as to suppress the boiling thereof, and flows into each steam generator 7 in the state of a high temperature and a high pressure. The nuclear reactor coolant which has a high temperature and a high pressure and flows into each steam generator 7 is cooled by exchanging heat with the secondary coolant, and the cooled nuclear reactor coolant is sent to the nuclear reactor 5 by each nuclear reactor coolant pump 9 through the cold leg 6a. Then, the cooled nuclear reactor coolant flows into the nuclear reactor 5, so that the nuclear reactor 5 is cooled. That is, the nuclear reactor coolant circulates between the nuclear reactor 5 and the steam generator 7. Note that, the nuclear reactor coolant is light water which is obtained by dissolving boron used as coolant and neutron moderator.

The turbine system 4 includes a turbine 22 which is connected to each steam generator 7 through a steam pipe 21, a condenser 23 which is connected to the turbine 22, and a water supply pump 24 which is provided in a water supply pipe 26 connecting the condenser 23 to each steam generator 7. Then, a power generator 25 is connected to the turbine 22.

Here, a series of operations of the turbine system 4 of the nuclear facility 1 will be described. When the steam flows from each steam generator 7 into the turbine 22 through the steam pipe 21, the turbine 22 rotates. When the turbine 22 rotates, the power generator 25 which is connected to the turbine 22 generates power. Subsequently, the steam which flows out of the turbine 22 flows into the condenser 23. The condenser 23 has a cooling pipe 27 disposed therein, where a water intake pipe 28 which supplies cooling water (for example, sea water) is connected to one side of the cooling pipe 27 and a drain pipe 29 which drains the cooling water is connected to the other side of the cooling pipe 27. Then, the condenser 23 returns the steam into a liquid by cooling the steam flowing from the turbine 22 by the cooling pipe 27. The liquefied secondary coolant is sent to each steam generator 7 by the water supply pump 24 through the water supply pipe 26. The secondary coolant which is sent to each steam generator 7 changes into steam again by exchanging heat with the nuclear reactor coolant in each steam generator 7.

The nuclear facility 1 with the above-described configuration is provided with a water injecting system (not illustrated), and the water injecting system may inject the nuclear reactor coolant obtained by dissolving boron therein into the nuclear reactor cooling system 3. At this time, the boron concentration of the nuclear reactor coolant circulating in the nuclear reactor cooling system 3 is different from the boron concentration of the nuclear reactor coolant injected into the nuclear reactor cooling system 3. For this reason, the pressurizer 8 is provided with the mixing system 40 which equalizes the boron concentration. Hereinafter, the mixing system 40 will be described with reference to FIG. 1.

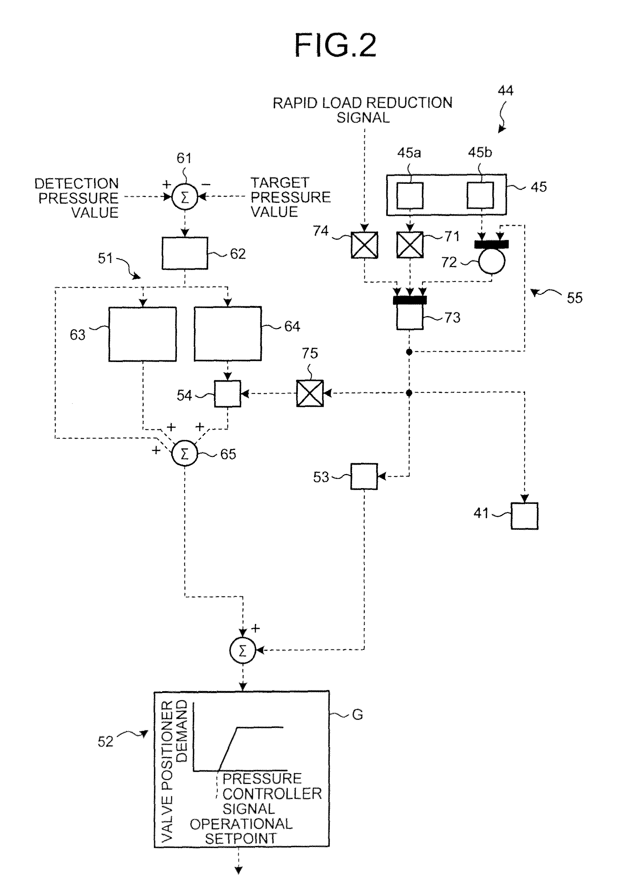

The mixing system 40 includes a backup heater 41, a spray valve 42, a pressure sensor (a pressure detector) 43, and a pressure control unit (a pressure controller) 44, and when an operator operates a mixing switch (see FIG. 2) 45, the mixing system 40 is operated.

The backup heater 41 serves as a heater, and is installed below the water surface of the nuclear reactor coolant accumulated inside the pressurizer 8. The backup heater 41 increases the internal pressure of the pressurizer 8 by heating the nuclear reactor coolant accumulated inside the pressurizer 8. The spray valve 42 serves as a cooler, and is installed above the water surface of the nuclear reactor coolant accumulated inside the pressurizer 8. The spray valve 42 sprays spray water into the pressurizer 8 and cools the steam accumulated inside the pressurizer 8, so that the internal pressure of the pressurizer 8 is decreased. Further, the spray valve 42 is operated so as to have a valve position corresponding to a valve positioned demand from the pressure control unit 44. A supply passageway 48 which supplies the spray water is connected to the spray valve 42. Then, in the supply passageway 48, one end thereof is connected to the spray valve 42 and the other end is connected to the cold leg 6a.

The pressure sensor 43 is installed inside the pressurizer 8, and detects the internal pressure of the pressurizer 8. Then, the pressure sensor 43 outputs the detected internal pressure of the pressurizer 8 as a detection pressure value (a detection input value) to the pressure control unit 44. The pressure control unit 44 controls the position of the spray valve 42 by outputting the valve positioner demand to the spray valve 42 so that the internal pressure of the pressurizer 8 becomes the target pressure based on the detection pressure value input from the pressure sensor 43. The pressure control unit 44 performs different pressure controls by a normal mode and a mixing mode. Note that, in the pressure control using the pressure control unit 44, the mode is switched by operating the mixing switch 45 which is installed in an operation device (not illustrated) for operating the nuclear facility 1.

The mixing switch 45 is configured to be switchable between an operation side (a mixing mode side) that starts the mixing (blending) of the nuclear reactor coolant and a non-operation side (a normal mode side) that ends the mixing of the nuclear reactor coolant. When the operator switches the mixing switch 45 to the operation side, the pressure control in the normal mode is switched to the pressure control in the mixing mode by the pressure control unit 44. Meanwhile, when the operator switches the mixing switch 45 to the non-operation side, the pressure control in the mixing mode is switched to the pressure control in the normal mode by the pressure control unit 44. Note that, although it will be described later in detail, when the mixing switch 45 is switched to the operation side, the backup heater 41 is automatically operated so as to heat the nuclear reactor coolant.

Here, a configuration of the pressure control unit 44 will be described in detail with reference to FIG. 2. FIG. 2 is an explanatory diagram illustrating a circuit of the pressure control unit. The pressure control unit 44 includes a PID control unit 51 (a feedback controller), a signal converter 52, a bias setting unit 53, a signal blocking unit (a derivative control blocking unit) 54, and a mode switching unit 55.

The PID control unit 51 performs a PID control based on the detection signal input from the pressure sensor 43, and outputs the detection signal subjected to the PID control as a control signal to the signal converter 52. Specifically, the PID control unit 51 includes a differential circuit 61, a proportional control circuit 62, an integral control circuit 63, a derivative control circuit 64, and an adding circuit 65. The differential circuit 61 calculates a difference between a detection pressure value input from the pressure sensor 43 and a predetermined target pressure value. The proportional control circuit 62 performs a proportional operation of the differential pressure value output from the differential circuit 61. The integral control circuit 63 performs an integral operation of the differential pressure value output from the proportional control circuit 62. The derivative control circuit 64 performs a derivative operation of the differential pressure value output from the proportional control circuit 62. The adding circuit 65 adds an output from the proportional control circuit 62, a output from the integral control circuit 63, and an output from the derivative control circuit 64.

Thus, when a detection pressure value is input to the PID control unit 51, the PID control unit 51 obtains a differential pressure value, which is a difference with respect to a target pressure value, by the differential circuit 61. Subsequently, the proportional control of the differential pressure value is performed by the proportional control circuit 62. The differential pressure value subjected to the proportional control is input to each of the integral control circuit 63 and the derivative control circuit 64. The differential pressure value which is input to the integral control circuit 63 is subjected to the integral control and is input to the adding circuit 65. Then, the differential pressure value which is input to the derivative control circuit 64 is subjected to the derivative control and is input to the adding circuit 65. Then, the adding circuit 65 adds the output from the proportional control circuit 62, the output from the integral control circuit 63, and the output from the derivative control circuit 64, and outputs the sum as a pressure controller signal to the signal converter 52.

The signal converter 52 outputs the valve positioner demand which becomes an operation signal for operating the spray valve 42 to the spray valve 42 based on the input pressure controller signal. Specifically, the signal converter 52 derives the valve positioner demand corresponding to the input pressure controller signal based on a valve control graph G which correlates the pressure controller signal and the valve positioner demand. In the valve control graph G, the horizontal axis indicates the pressure controller signal and the vertical axis indicates the valve positioner demand. In the valve control graph G, when the pressure controller signal is 0, the valve positioner demand becomes 0 and the spray valve 42 is closed. Further, when the pressure controller signal becomes larger than a predetermined operational setpoint, the valve positioner demand becomes larger than 0 and the spray valve 42 is adjusted to a predetermined position. Then, when the pressure controller signal further increases, the valve positioner demand reaches the upper limit value and the spray valve 42 is fully opened.

The bias setting unit 55 sets a bias toward the operation side of the spray valve 42 with respect to the pressure controller signal which is input from the PID control unit 51 to the signal converter 52. Specifically, the bias setting unit 53 adds a bias pressure value (a bias setting value) to the pressure controller signal. At this time, the bias pressure value becomes a value in which the pressure controller signal subjected to the setting of the bias is larger than the operational setpoint. For this reason, when the bias pressure value is added to the pressure controller signal by the bias setting unit 53, the pressure controller signal subjected to the setting of the bias becomes larger than the operational setpoint, so that the spray valve 42 is opened. Accordingly, the pressure control unit 44 sets the bias and cools the nuclear reactor coolant by the spray valve 42. Note that, the bias pressure value may be appropriately changed by the operator.

The signal blocking unit 54 blocks a signal which is output from the derivative control circuit 64 of the PID control unit 51. The signal blocking unit 54 is connected to a third NOT circuit 75 of the mode switching unit 55 to be described later, and does not block the signal from the derivative control circuit 64 when a cancel signal is input from the third NOT circuit 75. Meanwhile, the signal blocking unit 54 blocks the signal from the derivative control circuit 64 when no cancel is input from the third NOT circuit 75.

The mode switching unit 55 switches the normal mode and the mixing mode by the switching operation of the mixing switch 45. The mixing switch 45 includes a normal signal output unit 45a which outputs a signal of the normal mode and a mixing signal output unit 45b which outputs a signal of the mixing mode. Then, when switching to the non-operation side, the mixing switch 45 outputs the signal of the normal mode from the normal signal output unit 45a and does not output the signal of the mixing mode from the mixing signal output unit 45b. Meanwhile, when switching to the operation side, the mixing switch 45 does not output the signal of the normal mode from the normal signal output unit 45a and outputs the signal of the mixing mode from the mixing signal output unit 45b.

The mode switching unit 55 includes a first NOT circuit 71 which is connected to the normal signal output unit 45a, an OR circuit 72 which is connected to the mixing signal output unit 45b, a second NOT circuit 74 which receives a rapid load reduction signal, and an AND circuit 73 which is connected to the first NOT circuit 71, the second NOT circuit 74, and the OR circuit 72.

The input side of the OR circuit 72 is connected with the mixing signal output unit 45b and the output side of the AND circuit 73. For this reason, the OR circuit 72 outputs a signal to the AND circuit 73 when a signal is input from the mixing signal output unit 45b. Further, the OR circuit 72 constitutes a part of a latch circuit, and outputs a signal to the AND circuit 73 when a signal is input from the AND circuit 73.

The input side of the first NOT circuit 71 is connected with the normal signal output unit 45a. For this reason, the first NOT circuit 71 does not cutput a signal to the AND circuit 73 when a signal is input from the normal signal output unit 45a and outputs a signal to the AND circuit 73 when no signal is input from the normal signal output unit 45a.

The second NOT circuit 74 receives a rapid load reduction signal, and the rapid load reduction signal is a signal which is output when the load added to the turbine 22 rapidly reduces. The second NOT circuit 74 blocks the mixing mode when the rapid load reduction signal is output.

The input side of the AND circuit 73 is connected with the OR circuit 72, the first NOT circuit 71, and the second NOT circuit 74. For this reason, the AND circuit 73 outputs a signal when signals are input from the OR circuit 72, the first NOT circuit 71, and the second NOT circuit 74. Meanwhile, the AND circuit 73 does not output a signal when no signal is input from any one circuit among the OR circuit 72, the first NOT circuit 71, and the second NOT circuit 74.

Further, in the mode switching unit 55, the output side of the AND circuit 73 is connected with the bias setting unit 53, the third NOT circuit 75, and the backup heater 41. For this reason, the bias setting unit 53 sets a bias when a signal is input from the AND circuit 73 and does not set a bias when no signal is input from the AND circuit 73. Further, the backup heater 41 is automatically operated when a signal is input from the AND circuit 73 and is not automatically operated when no signal is input from the AND circuit 73. Further, the third NOT circuit 75 does not output a cancel signal to the signal blocking unit 54 when a signal is input from the AND circuit 73 and outputs a cancel signal to the signal blocking unit 54 when no signal is input from the AND circuit 73.

Subsequently, a series of operations will be described in which the pressure control in the normal mode using the pressure control unit 44 is switched to the pressure control in the mixing mode using the pressure control unit 44 by the switching operation of the mixing switch 45. When switching the mixing switch 45 to the non-operation side, the normal signal output unit 45a of the mixing switch 45 outputs a signal and the mixing signal output unit 45b does not output a signal. For this reason, the AND circuit 73 does not receive a signal from the first NOT circuit 71 and does not receive a signal from the OR circuit 72. Accordingly, since the AND circuit 73 does not output a signal, the bias setting unit 53 does not set a bias with respect to the pressure controller signal, the backup heater 41 is not operated, and the third NOT circuit 75 outputs the cancel signal.

Thus, when the detection pressure value is input from the pressure sensor 43 in the normal mode, the pressure control unit 44 obtains the differential pressure value by the differential circuit 61, and the differential pressure value is subjected to the proportional effect, the integral effect, and the derivative effect by the proportional control circuit 62, the integral control circuit 63, and the derivative control circuit 64. Then, the differential pressure value subjected to the PID control is output as the pressure controller signal from the adding circuit 65 to the signal converter 52. The signal converter 52 derives the valve positioner demand from the input pressure controller signal and the valve control graph G, and outputs the valve positioner demand to the spray valve 42. Then, the spray valve 42 has a position corresponding to the input valve positioner demand. Accordingly, the pressure control unit 44 performs a feedback control on the spray valve 42 based on the detection result of the pressure sensor 43.

Meanwhile, when the mixing switch 45 is switched from the non-operation side to the operation side and no rapid load reduction signal is input to the second NOT circuit 74, the normal signal output unit 45a of the mixing switch 45 does not output a signal, the mixing signal output unit 45b outputs a signal, and the second NOT circuit 74 outputs a signal. For this reason, the AND circuit 73 receives signals from the first NOT circuit 71, the OR circuit 72, and the second NOT circuit 74. Accordingly, since the AND circuit 73 outputs a signal, the bias setting unit 53 sets a bias with respect to the pressure controller signal, the backup heater 41 is operated, and the third NOT circuit 75 does not output the cancel signal.

Thus, when the detection pressure value is input from the pressure sensor 43 in the mixing mode, the pressure control unit 44 obtains the differential pressure value by the differential circuit 61. Subsequently, the differential pressure value is subjected to the proportional effect and the integral effect by the proportional control circuit 62 and the integral control circuit 63. Meanwhile, since the derivative control circuit 64 is blocked by the signal blocking unit 54, the differential pressure value is not subjected to the derivative effect by the derivative control circuit 64. Then, the differential pressure value subjected to the PI control is output as the pressure controller signal from the adding circuit 65. The pressure controller signal which is output from the adding circuit 65 is added to the bias pressure value by the bias setting unit 53, and the sum is output to the signal converter 52. The signal converter 52 derives the valve positioner demand from the input pressure controller signal and the valve control graph G, and outputs the valve positioner demand to the spray valve 42. At this time, since the pressure controller signal subjected to the setting of a bias is larger than the operational setpoint, the spray valve 42 is operated substantially at the same timing as that of the switching operation to the mixing mode by the mixing switch 45. Accordingly, when switching to the mixing mode by the mixing switch 45, the backup heater 41 and the spray valve 42 are operated substantially at the same timing, and the pressure control unit 44 performs a feedback control on the spray valve 42 based on the detection result of the pressure sensor 43.

Note that, when the mixing switch 45 is switched from the non-operation side to the operation side and the rapid load reduction signal is input to the second NOT circuit 74, the second NOT circuit 74 does not output a signal to the AND circuit 73. For this reason, the AND circuit 73 does not receive a signal from the second NOT circuit 74. Accordingly, since the AND circuit 73 does not output a signal, the pressure control unit 44 performs the pressure control in the normal mode even when the mixing switch 45 is switched to the operation side.

According to the above-described configuration, since it is possible to set a bias with respect to the pressure controller signal when heating the nuclear reactor coolant by the backup heater 41, the pressure control unit 44 may promptly operate the spray valve 42 in the mixing mode. Accordingly, since the pressure control unit 44 may promptly cool the nuclear reactor coolant, it is possible to suppress a transient increase in the internal pressure of the pressurizer 8 which is heated by the backup heater 41. Thus, the pressure control unit 44 may stably control the internal pressure of the pressurizer 8 when heating the coolant inside the pressurizer 8, so that the internal pressure inside the pressurizer 8 may be appropriately maintained at the target pressure.

Further, since the bias setting value may be appropriately changed, the spray valve 42 may be promptly operated even when the operational setpoint which is set in accordance with the spray valve 42 to be used changes.

Further, since the backup heater 41 may be automatically operated simultaneously when setting the bias, the operator's manual operation may not be provided.

Further, it is possible to eliminate the derivative effect with respect to an increase in the internal pressure of the pressurizer 8 when heating the nuclear reactor coolant. Accordingly, it is possible to suppress a change in the pressure inside the pressurizer 8 from being widened when heating the nuclear reactor coolant, and hence to perform a stable control.

### Industrial Applicability

As described above, the mixing system according to the invention is useful in the nuclear facility having the pressurized water reactor, and is particularly suitable for the case of equalizing the boron concentration of the nuclear reactor coolant circulating in the nuclear reactor cooling system.

**Reference Signs List**

| | |
|---|---|
| 1 | NUCLEAR FACILITY |
| 3 | NUCLEAR REACTOR COOLING SYSTEM |
| 4 | TURBINE SYSTEM |
| 5 | NUCLEAR REACTOR |
| 6a | COLD LEG |
| 6b | HOT LEG |
| 7 | STEAM GENERATOR |
| 8 | PRESSURIZER |
| 9 | NUCLEAR REACTOR COOLANT PUMP |
| 15 | FUEL ASSEMBLY |
| 16 | CONTROL ROD |
| 21 | STEAM PIPE |
| 22 | TURBINE |
| 23 | CONDENSER |
| 24 | WATER SUPPLY PUMP |
| 25 | POWER GENERATOR |
| 26 | WATER SUPPLY PIPE |
| 27 | COOLING PIPE |
| 28 | WATER INTAKE PIPE |
| 29 | DRAIN PIPE |
| 40 | MIXING SYSTEM |
| 41 | BACKUP HEATER |
| 42 | SPRAY VALVE |
| 43 | PRESSURE SENSOR |
| 44 | PRESSURE CONTROL UNIT |
| 45 | MIXING SWITCH |
| 48 | SUPPLY PASSAGEWAY |
| 51 | PID CONTROL UNIT |
| 52 | SIGNAL CONVERTER |
| 53 | BIAS SETTING UNIT |
| 54 | SIGNAL BLOCKING UNIT |
| 55 | MODE SWITCHING UNIT |

## Claims

1. A mixing system which circulates a coolant inside a pressurizer while maintaining an internal pressure of the pressurizer installed in a nuclear facility at a predetermined target pressure, the mixing system comprising:
a heater which is installed inside the pressurizer and heats the coolant so as to increase the internal pressure of the pressurizer;
a cooler which is installed inside the pressurizer and cools the coolant so as to decrease the internal pressure of the pressurizer;
a pressure detector which detects the pressure inside the pressurizer; and
a pressure controller which performs a feedback control on the cooler so that the pressure becomes the target pressure based on a detection input value detected by the pressure detector, wherein
the pressure controller includes
a feedback controller which performs a feedback control on the detection input value detected when heating the coolant by the heater and outputs the result as a control output value to the cooler; and
a bias setting unit which sets a bias toward the operation side of the cooler with respect to the control output value, and
wherein the cooler is operated based on the control output value subjected to the setting of the bias.

2. The mixing system according to claim 1, wherein
the cooler is operated when the input control output value becomes a predetermined operation setting value or more, and
the bias setting unit sets the bias by adding a predetermined bias setting value to the control output value, and sets the bias setting value so that the control output value subjected to the setting of the bias becomes the operation setting value or more.

3. The mixing system according to claim 2, wherein the bias setting value is changeable.

4. The mixing system according to any one of claims 1 to 3, wherein the heater automatically heats the coolant simultaneously when the bias is set by the bias setting unit.

5. The mixing system according to any one of claims 1 to 4, wherein
the feedback controller performs a PID control, and
the pressure controller further includes a derivative control blocking unit which blocks a derivative control inside the PID control when heating the coolant by the heater.
